# EUROPEAN PATENT APPLICATION

(11) **EP 2 962 807 A2**
(43) Date of publication of application: **06.01.2016**
(21) Application number: 15173773.1
(22) Date of filing: 25.06.2015
(51) Int. Cl.: B24B 31/10, B24B 1/00

(54) **COMPONENT SURFACE FINISHING SYSTEMS AND METHODS**

(30) Priority: 30.06.2014 US 201414318943
(71) Applicant: General Electric Company, Schenectady, NY 12345 (US)
(72) Inventor: CUI, Yan, Greenville, SC South Carolina 29615 (US); KOTTILINGAM, Srikanth Chandrudu, Greenville, SC South Carolina 29615 (US); TOLLISON, Brian Lee, Greenville, SC South Carolina 29615 (US); LIN, Dechao, Greenville, SC South Carolina 29615 (US); SCHICK, David Edward, Greenville, SC South Carolina 29615 (US)
(74) Representative: Lee, Brenda

(57) **Abstract**

Methods for finishing a component 10 include providing the component comprising one or more interior surfaces 15 fluidly connected to one or more exterior surfaces 17, providing a plurality of magnetic particles 30, and applying a magnetic field 55 so as to repeatedly move the magnetic particles against the interior surfaces and exterior surfaces of the component.

## Description

### BACKGROUND OF THE INVENTION

The subject matter disclosed herein relates to component surface finishing systems and, more specifically, to component surface finishing systems and methods using magnetic particles.

The manufacturing process of components can incorporate a variety of stages. For example, components may initially be cast, forged, built or otherwise created in an initial form. While this initial form may provide a near-net shape of the final component, the manufacturing process may further include one or more surface finishing operations to modify (e.g., smooth, harden or otherwise alter) one or more internal and/or external surfaces.

Additive manufacturing is one example of a process that may include one or more finishing operations for component production. Additive manufacturing processes generally involve the buildup of one or more materials to make a net or near net shape object, in contrast to subtractive manufacturing methods. Though "additive manufacturing" is an industry standard term (ASTM F2792), additive manufacturing encompasses various manufacturing and prototyping techniques known under a variety of names, including freeform fabrication, 3D printing, rapid prototyping/tooling, etc. Additive manufacturing techniques are capable of fabricating complex components from a wide variety of materials. Generally, a freestanding object can be fabricated from a computer aided design (CAD) model. One exemplary additive manufacturing process uses an energy beam, for example, an electron beam or electromagnetic radiation such as a laser beam, to sinter or melt a powder material, creating a solid three-dimensional object in which particles of the powder material are bonded together. Different material systems, for example, engineering plastics, thermoplastic elastomers, metals, and ceramics may be used. Laser sintering or melting is one exemplary additive manufacturing process for rapid fabrication of functional prototypes and tools. Applications can include patterns for investment casting, metal molds for injection molding and die casting, molds and cores for sand casting, and relatively complex components themselves. Fabrication of prototype objects to facilitate communication and testing of concepts during the design cycle are other common usage of additive manufacturing processes. Likewise, components comprising more complex designs, such as those with internal passages that are less susceptible to other manufacturing techniques including casting or forging, may be fabricated using additive manufacturing methods.

Laser sintering can refer to producing three-dimensional (3D) objects by using a laser beam to sinter or melt a fine powder. Specifically, sintering can entail fusing (agglomerating) particles of a powder at a temperature below the melting point of the powder material, whereas melting can entail fully melting particles of a powder to form a solid homogeneous mass. The physical processes associated with laser sintering or laser melting include heat transfer to a powder material and then either sintering or melting the powder material. Although the laser sintering and melting processes can be applied to a broad range of powder materials, the scientific and technical aspects of the production route, for example, sintering or melting rate, and the effects of processing parameters on the microstructural evolution during the layer manufacturing process can lead to a variety of production considerations. For example, this method of fabrication may be accompanied by multiple modes of heat, mass and momentum transfer, and chemical reactions.

Laser sintering/melting techniques can specifically entail projecting a laser beam onto a controlled amount of powder material (e.g., a powder metal material) on a substrate (e.g., build plate) so as to form a layer of fused particles or molten material thereon. By moving the laser beam relative to the substrate along a predetermined path, often referred to as a scan pattern, the layer can be defined in two dimensions on the substrate (e.g., the "x" and "y" directions), the height or thickness of the layer (e.g., the "z" direction) being determined in part by the laser beam and powder material parameters. Scan patterns can comprise parallel scan lines, also referred to as scan vectors or hatch lines, and the distance between two adjacent scan lines may be referred to as hatch spacing, which may be less than the diameter of the laser beam so as to achieve sufficient overlap to ensure complete sintering or melting of the powder material. Repeating the movement of the laser along all or part of a scan pattern may facilitate further layers of material to be deposited and then sintered or melted, thereby fabricating a three-dimensional object.

For example, laser sintering and melting techniques can include using continuous wave (CW) lasers, such as Nd: YAG lasers operating at or about 1064 nm. Such embodiments may facilitate relatively high material deposition rates particularly suited for repair applications or where a subsequent machining operation is acceptable in order to achieve a finished object. Other laser sintering and melting techniques may alternatively or additionally be utilized such as, for example, pulsed lasers, different types of lasers or different power/wavelength parameters, different powder materials or various scan patterns to facilitate the production of one or more three-dimensional objects.

However, these and other manufacturing techniques may produce objects with surfaces that could use one or more additional finishing processes. For example, components with interior passages (e.g., turbine buckets with cooling channels or turbine fuel mixing systems), may undergo finishing to smooth relatively rough surfaces. While various polishing and blasting techniques may be suitable for finishing exterior surfaces, interior surfaces of interior passages may be more difficult to access.

Accordingly, alternative component surface finishing systems and methods would be welcome in the art.

### BRIEF DESCRIPTION OF THE INVENTION

In one embodiment, a method for finishing a component is disclosed. The method includes providing the component comprising one or more interior surfaces fluidly connected to one or more exterior surfaces, providing a plurality of magnetic particles, and applying a magnetic field so as to repeatedly move the magnetic particles against the interior surfaces and exterior surfaces of the component.

In another embodiment, a component surface finishing system is disclosed. The component surface finishing system includes a chamber housing a plurality of magnetic particles, a component support stand inside the chamber, and, one or more magnets that generate one or more magnetic fields to move the magnetic particles around the component support stand inside the chamber.

These and additional features provided by the embodiments discussed herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is a cross-sectional illustration of a component according to one or more embodiments shown or described herein;
FIG. 2 is a schematic interaction of part of a component surface finishing system interacting with part of a component according to one or more embodiments shown or described herein;
FIG. 3 is a schematic illustration of a component surface finishing system according to one or more embodiments shown or described herein;
FIG. 4 is a schematic illustration of a component surface finishing system in operation according to one or more embodiments shown or described herein; and,
FIG. 5 illustrates an exemplary method for finishing surfaces of a component according to one or more embodiments shown or described herein.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Component surface finishing systems and methods disclosed herein can facilitate the finishing (i.e., modification such as through smoothing, hardening or otherwise altering) of interior and exterior surfaces of components, such as those manufactured through additive manufacturing. Specifically, a plurality of magnetic particles can be provided in and around the component. A magnetic field can then be applied to move the plurality of magnetic particles in a variety of directions such that they repeatedly strike the interior and exterior surfaces of the component. By tailoring the size, hardness, magnetic properties and other physical and chemical characteristics of the magnetic particles, as well as the strength and direction of the magnetic field, the magnetic particles may move within and through interior passages of the component to facilitate both interior and exterior surface finishing.

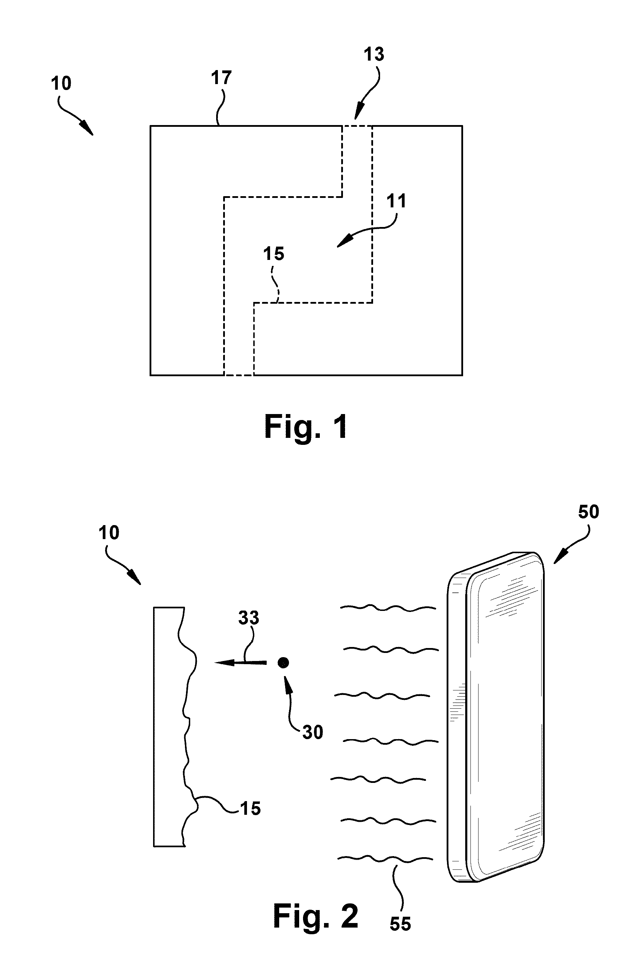

Referring now to FIG. 1, a component 10 is illustrated comprising one or more interior surfaces 15 that are fluidly connected to one or more exterior surfaces 17. As used herein, "fluidly connected" and variants thereof refers to an interior surface 15 that is part of an interior passage 11 that is fluidly connected to the exterior surface 17 of the component 10 via one or more entries 13 such that air, liquid, particles or the like may enter the interior passage 11 through the entry 13. The component 10 can comprise any type of component. For example, in some embodiments, the component 10 may comprise a turbine component such as one used in the combustion stage or hot gas path stage. In such embodiments, the turbine component may comprise one or more internal cooling channels that comprise the plurality of interior surfaces 15. The cooling channels may be fluidly connected to the exterior surface 17 via one or more cooling holes (i.e., entries 13). In other such embodiments, the turbine component may comprise a fuel mixing component for the combustion stage of the turbine. For example, the component 10 may comprise a micromixer for receiving and dispersing flow into a combustor. In some embodiments, the component 10 may comprise other non-turbine components that comprise one or more interior surfaces 15 that are fluidly connected to one or more exterior surfaces 17.

Furthermore, the component 10 may comprise a variety of materials and be manufactured by a variety of techniques. For example, in some embodiments, the component 10 may comprise a metal or alloy. In such embodiments, the component 10 may be manufactured through casting, forging, joining or the like, or combinations thereof. In even some embodiments, the component 10 may be manufactured through additive manufacturing. It should also be appreciated that as used herein, "additive manufacturing" refers to any process which results in a three-dimensional object and includes a step of sequentially forming the shape of the object one layer at a time. Additive manufacturing processes include, for example, three dimensional printing, laser-net-shape manufacturing, direct metal laser sintering (DMLS), direct metal laser melting (DMLM), plasma transferred arc, freeform fabrication, and the like. One exemplary type of additive manufacturing process uses a laser beam to sinter or melt a powder material. Additive manufacturing processes can employ powder materials or wire as a raw material. Moreover additive manufacturing processes can generally relate to a rapid way to manufacture an object (article, component, part, product, etc.) where a plurality of thin unit layers are sequentially formed to produce the object. For example, layers of a powder material may be provided (e.g., laid down) and irradiated with an energy beam (e.g., laser beam) so that the particles of the powder material within each layer are sequentially sintered (fused) or melted to solidify the layer.

Depending in part on the manufacturing technique of the component 10, the one or more interior surfaces 15 may comprise a variety of roughness profiles. For example, the surface roughness of the one or more interior surfaces 15 may require additional finishing to facilitate greater utilization in the component 10 in its intended application. In some exemplary embodiments, such as those where the component 10 is manufactured by additive manufacturing, the surface roughness of the one or more interior surfaces may be from about 300 to about 600 Ra in micro inches (about 7.62 to about 15.24 microns).

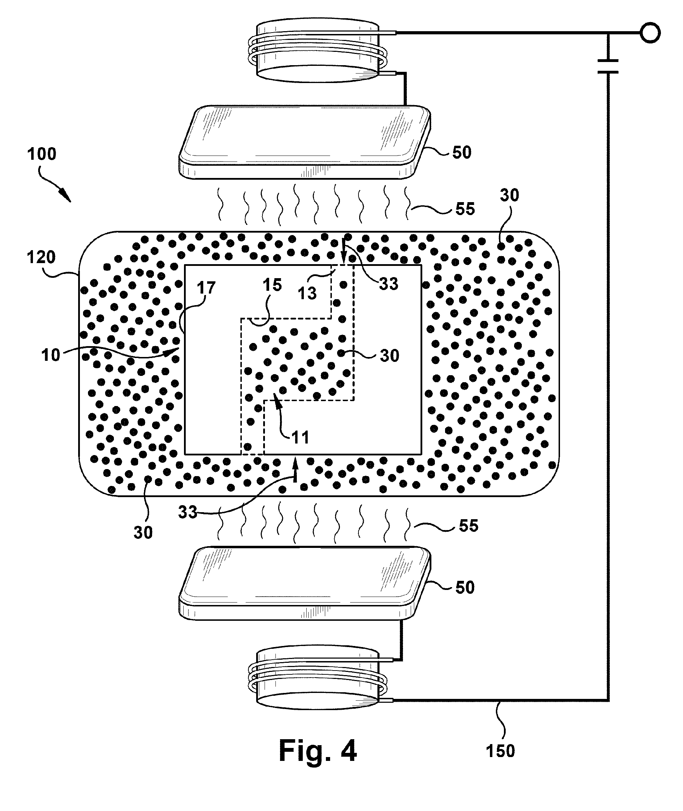

Referring now to FIGS. 2 and 4, a plurality of magnetic particles 30 may be utilized in conjunction with a magnet 50 (and its magnetic field 55) to repeatedly strike the one or more interior surfaces 15 and facilitate the finishing of the component 10.

The plurality of magnetic particles 30 can comprise any metal or alloy that have sufficient magnetic properties to be moved around by the magnetic field 55 and sufficient physical properties to facilitate the finishing of the one or more interior surfaces 15 of the component 10 through repeated contact. In some embodiments, the plurality of magnetic particles 30 may comprise a nickel or cobalt based magnetic alloy such as a Ni-Co-Fe alloy. For example, by selecting a composition of an alloy that comprises nickel, cobalt and iron and falls within the perminvar region, the alloy can comprise sufficient magnetism and physical properties to finish one or more interior surfaces 15 of a component 10 through the manipulation of a magnetic field 55. In such embodiments, the magnetic particles 30 may comprise a composition comprising from greater than 0 percent to about 75 percent nickel, from about 9 percent to about 45 percent cobalt and from greater than 0 percent to about 79 percent iron. In some embodiments, the composition of the magnetic particles 30 may further comprise from greater than 0 percent to about 2 percent carbon and from greater than 0 percent to about 1 percent boron to increase hardness and wear resistance.

Furthermore, the magnetic particles 30 can comprise any suitable size or sizes that facilitate the movement of at least a portion of the magnetic particles 30 into and through the one or more interior passages 11 such that they can strike the one or more interior surfaces 15. For example, at least a portion of the magnetic particles 30 may comprise a size smaller than the entry 13 to the interior passage 11. In some embodiments, the magnetic particles 30 may comprise a significantly smaller size than the entry 13 to the interior passage 11 such that they have more room to move back and forth inside the component 10. For example, in some embodiments, the magnetic particles 30 may comprise a grit size of from about 70 micrometers to about 600 micrometers, or from about 74 micrometers to about 595 micrometers. It should be appreciated that the magnetic particles 30 may further comprise any distribution of sizes. Furthermore, the magnetic particles 30 may comprise any shape or shapes such as spheres, cubes, pyramids, tetrahedrons, octahedrons or any other geometrical or non-geometrical shapes, or combinations thereof. In some embodiments, the magnetic particles 30 may comprise a hardness of from about 20 to about 60 Rockwell C to help facilitate the finishing of the one or more interior surfaces 15.

Still referring to FIGS. 2 and 4, the magnetic field 55 can comprise any suitable strength and be generated from any suitable source to move the plurality of particles 30 in one or more directions 33. For example, the magnetic field 55 may comprise a strength of greater than zero but less than or equal to 2 Tesla.

Furthermore, to facilitate the movement of the magnetic particles 30 a variety of directions 33 with respect to the component 10 (so as to strike and finish the one or more interior surfaces 15), the magnetic field 55 may be varied. For example, in some embodiments, the magnetic field 55 may be provided via one or more magnets 50. In such embodiments, the one or more magnets 50 may selectively increase or decrease the strength of their respective magnetic fields 55 to move the magnetic particles 30 in one or more directions 33. Alternatively or additionally, the one or more magnets 50 may move (e.g., rotate) with respect to the component 10 to move the magnetic particles 30 in one or more directions 33. For example, the one or more magnets 50 may rotate around the component 10 at a speed of from about 150 RPM to about 450 RPM.

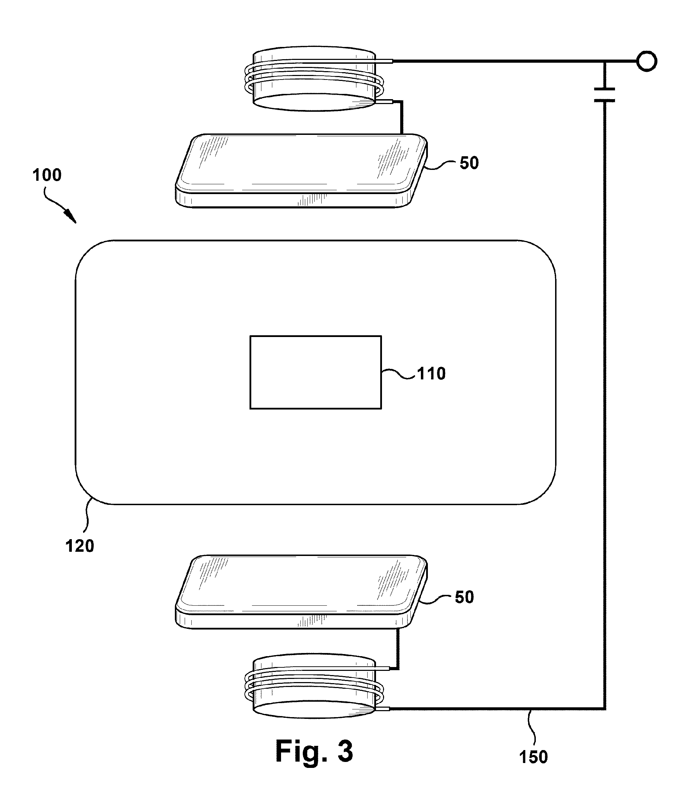

Referring now to FIGS. 3 and 4, a component surface finishing system 100 is illustrated incorporating the various elements discussed above. The component surface finishing system 100 generally comprises a chamber 120 that can house a plurality of magnetic particles 30. The component surface finishing system 100 further comprises a component support stand 110 that is disposed inside the chamber 120 and is configured to support one or more components 10 during the finishing operation. Furthermore, the component surface finishing system comprises one or more magnets 50 that can generate one or more magnetic fields 55 to move the magnetic particles 30 around the component support stand 110 (and thereby around a component 10 supported thereon) inside of the chamber 120.

The chamber 120 of the component surface finishing system 100 can comprise any size suitable to house the plurality of magnetic particles 30 in addition to one or more components 10 on the component support stand 110. Furthermore, the chamber 120 may comprise any material or materials suitable for allowing the one or more magnetic fields to pass there through while being strong enough to withstand repeated impact by the plurality of magnetic particles 30. In some embodiments, the chamber 120 may comprise a transparent material such that an operator may view the component 10 during the finishing operation.

The component support stand 110 can comprise any suitable fixture that can support one or more components 10 during the finishing operation (i.e., when the plurality of magnetic particles 30 are moving in a variety of directions 33 due to the one or more magnetic fields 55). For example, the component support stand 110 may comprise one or more pins that can grab the turbine component 10 without blocking the entries 13 to the interior passages 11. In some embodiments, the component support stand 110 may be configured to support a turbine component. In some embodiments, the component support stand 110 may be configured to support an additive manufactured component. In even some embodiments, the component support stand 110 may itself be able to move (e.g., rotate) the component 10 during operation.

As discussed above, the one or more magnets 50 of the component surface finishing system 100 can comprise a variety of types and configurations. For example, the one or more magnets 50 may comprise a plurality of magnets 50 that can rotate around the component support stand 110 or the chamber 120 itself. In some embodiments, the one or more magnets 50 may be connected to one or more power sources 150 (such as illustrated in FIG. 4) that can selectively vary the power of the one or more magnetic fields 55 (e.g., turn on/off or otherwise increase/decrease the strength).

As best illustrated in FIG. 4, in operation, both the component 10 and the plurality of magnetic particles 30 are inserted into the chamber 120. In some embodiments, all or a portion of the magnetic particles 30 may even be inserted into the component 10 itself (such as being poured into the interior passage 11 through the entry 13) to help facilitate finishing of the interior surfaces 15 of the component 10. In some embodiments, the variation (e.g., movement) of the magnetic fields 55 may alone or in combination lead to the insertion of the magnetic particles 30 into the component 10.

Once the component 10 and the magnetic particles 30 are disposed inside the chamber 120, the one or more magnets 50 can apply one or more magnetic fields 55 to move the plurality of magnetic particles 30 in a plurality of directions 33 around the component support stand 110 and the component 10. The movement of the magnetic particles 30 in a plurality of directions 33 can be facilitated by varying the magnetic fields 55, moving (e.g., rotating) the one or more magnets 50, or any other suitable technique or combinations thereof as discussed herein. Over time, the plurality of magnetic particles 30 will thereby enter the interior passage 11 of the component and move around therein to repeatedly strike the one or more interior surfaces 15. This interaction can thereby facilitate the finishing (e.g., modification by smoothing, hardening or otherwise altering) the one or more interior surfaces 15. In particular, by providing suitably sized magnetic particles 30 and varying the one or more magnetic fields 55 of sufficient strength, the component surface finishing system 100 can facilitate the finishing of one or more interior surfaces 15 of a component 10 that may not be practical or feasible using other finishing techniques.

After finishing is complete, the magnetic fields 55 may be turned off or otherwise removed and the plurality of magnetic particles 30 may be separated from the component 10. The magnetic particles 30 may be separated from the component 10 using any suitable technique such as vibrations, gravity, vacuum or the like. In some embodiments, the turbine component 10 may simply be rotated to pour any magnetic particles 30 out of the interior passage 11 of the component 10.

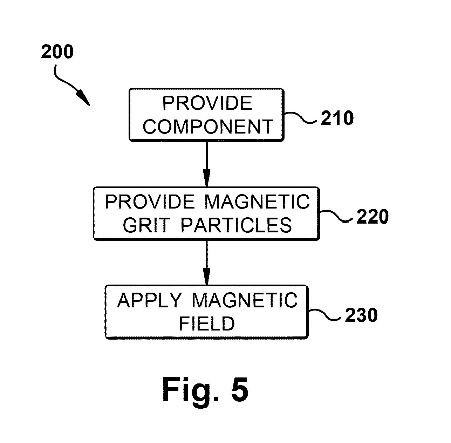

Referring now additionally to FIG. 5, a method 200 is illustrated for finishing a component 10 such as by using the component surface finishing system 100 disclosed herein. The method first comprises providing a component 10 in step 210 and providing a plurality of magnetic particles 30 in step 220. Providing the component 10 in step 210 specifically comprises providing a component 10 comprising one or more interior surfaces 15 fluidly connected to one or more exterior surfaces 17 as discussed herein. It should be appreciated that steps 210 and 220 can occur in any relative order, simultaneously or combinations thereof. Furthermore, in some embodiments, providing the plurality of magnetic particles 30 in step 220 may comprise inserting at least a portion of the magnetic particles 30 inside the component 10. In other embodiments, the component 10 and the magnetic particles 30 provided in steps 210 and 220 respectively may simply be provided near each other such as within a chamber 120 of a component surface finishing system 100.

The method 200 further comprises applying a magnetic field 55 in step 230 so as to repeatedly move the magnetic particles 30 against the interior surfaces 15 and exterior surfaces 17 of the component 10. As discussed herein, applying the magnetic field 55 in step 230 can comprise varying the magnetic field 55 such as by increasing or decreasing its strength, rotating one or more magnets 55 or otherwise manipulating the strength and/or direction of the one or more magnetic fields 55. Such application will move the magnetic particles 30 in variety of directions 33 such that they move in and around the turbine component 10 to contact one or more of its surfaces, particularly the one or more interior surfaces 15, including those not as accessible via other finishing techniques.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A method for finishing a component, the method comprising:
   providing the component comprising one or more interior surfaces fluidly connected to one or more exterior surfaces;
   providing a plurality of magnetic particles; and,
   applying a magnetic field so as to repeatedly move the magnetic particles against the interior surfaces and exterior surfaces of the component.
2. The method of clause 1, wherein the plurality of magnetic particles comprise a nickel or cobalt based alloy.
3. The method of any preceding clause, wherein the plurality of magnetic particles comprise from greater than 0 percent to about 75 percent nickel, from about 9 percent to about 45 percent cobalt, from greater than 0 percent to about 79 percent iron, from greater than 0 percent to about 2 percent carbon, and from greater than 0 percent to about 1 percent boron.
4. The method of any preceding clause, wherein the magnetic particles comprise a grit size of from about 70 micrometers to about 600 micrometers.
5. The method of any preceding clause, wherein applying the magnetic field comprises rotating one or more magnets around the component.
6. The method of any preceding clause, wherein the one or more magnets rotate around the component at a speed of from about 150 RPM to about 450 RPM.
7. The method of any preceding clause, wherein applying the magnetic field comprises varying a strength of the magnetic field.
8. The method of any preceding clause, wherein the component comprises a turbine component and wherein the one or more interior surfaces comprise interior surfaces of a cooling channel.
9. The method of any preceding clause, wherein the component comprises fuel mixing component for a combustion stage of a turbine.
10. The method of any preceding clause, wherein the component is an additive manufactured component.
11. A component surface finishing system comprising:
   a chamber housing a plurality of magnetic particles;
   a component support stand inside the chamber; and,
   one or more magnets that generate one or more magnetic fields to move the magnetic particles around the component support stand inside the chamber.
12. The component surface finishing system of any preceding clause, wherein the plurality of magnetic particles comprise a nickel or cobalt based alloy.
13. The component surface finishing system of any preceding clause, wherein the plurality of magnetic particles comprise from greater than 0 percent to about 75 percent nickel, from about 9 percent to about 45 percent cobalt, from greater than 0 percent to about 79 percent iron, from greater than 0 percent to about 2 percent carbon, and from greater than 0 percent to about 1 percent boron.
14. The component surface finishing system of any preceding clause, wherein the magnetic particles comprise a grit size of from about 70 micrometers to about 600 micrometers.
15. The component surface finishing system of any preceding clause, wherein the one or more magnets can rotate around the component support stand.
16. The component surface finishing system of any preceding clause, wherein the one or more magnets can rotate at a speed of from about 150 RPM to about 450 RPM.
17. The component surface finishing system of any preceding clause, wherein the one or more magnets can vary a strength of their one or more magnetic fields.
18. The component surface finishing system of any preceding clause, wherein the one or more magnets are connected to one or more power sources.
19. The component surface finishing system of any preceding clause, wherein the component support stand is configured to support a turbine component.
20. The component surface finishing system of any preceding clause, wherein the component support stand is configured to support an additive manufactured component.

## Claims

1. A method for finishing a component, the method comprising:
providing the component comprising one or more interior surfaces fluidly connected to one or more exterior surfaces;
providing a plurality of magnetic particles; and,
applying a magnetic field so as to repeatedly move the magnetic particles against the interior surfaces and exterior surfaces of the component.

2. The method of claim 1, wherein the plurality of magnetic particles comprise a nickel or cobalt based alloy.

3. The method of claim 1 or 2, wherein the magnetic particles comprise a grit size of from about 70 micrometers to about 600 micrometers.

4. The method of claim 1, 2 or 3, wherein applying the magnetic field comprises rotating one or more magnets around the component.

5. The method of any preceding claim, wherein applying the magnetic field comprises varying a strength of the magnetic field.

6. The method of any preceding claim, wherein the component comprises a turbine component and wherein the one or more interior surfaces comprise interior surfaces of a cooling channel.

7. The method of any preceding claim, wherein the component comprises fuel mixing component for a combustion stage of a turbine.

8. The method of any preceding claim, wherein the component is an additive manufactured component.

9. A component surface finishing system comprising:
a chamber housing a plurality of magnetic particles;
a component support stand inside the chamber; and,
one or more magnets that generate one or more magnetic fields to move the magnetic particles around the component support stand inside the chamber.

10. The component surface finishing system of claim 9, wherein the plurality of magnetic particles comprise a nickel or cobalt based alloy.

11. The component surface finishing system of claim 9 or 10, wherein the magnetic particles comprise a grit size of from about 70 micrometers to about 600 micrometers.

12. The component surface finishing system of claim 9, 10 or 11, wherein the one or more magnets can rotate around the component support stand.

13. The component surface finishing system of any of claims 9 to 12, wherein the one or more magnets can vary a strength of their one or more magnetic fields.

14. The component surface finishing system of any of claims 9 to 13, wherein the one or more magnets are connected to one or more power sources.

15. The component surface finishing system of any of claims 9 to 14, wherein the component support stand is configured to support an additive manufactured component.
